# DEMANDE DE BREVET EUROPEEN

(11) **EP 2 378 470 A1**
(43) Date de publication de la demande: **19.10.2011**
(21) Numéro de dépôt: 10159954.6
(22) Date de dépôt: 14.04.2010
(51) Int. Cl.: G06Q 10/00

(54) **Système de guidage d'un opérationnel sur un site de stockage**

(71) Demandeur: Alcatel Lucent, 75008 Paris (FR)
(72) Inventeur: Houllier, Jean-Roch, 91620 Nozay (FR); Soudani, Mounir, 91620, Nozay (FR)
(74) Mandataire: Lebkiri, Alexandre

(57) **Abrégé**

La présente invention concerne un système (100) de guidage d'un opérationnel (102) sur un site (112) de stockage de pièces (104, 106, 108, 110) d'un fournisseur (114), ledit opérationnel (102) devant effectuer des déplacements dans ledit site (112) de stockage pour accéder à différentes pièces requises, caractérisé en ce qu'il comprend:
i) un serveur de guidage (116), accessible au fournisseur (114), muni:
- de moyens pour stocker une cartographie (118) dudit site (112) de stockage et des localisations (105, 107, 109, 110) de pièces (104, 106, 108, 110) distribuées dans ledit site (112) de stockage, et
- de moyens pour déterminer un déplacement optimisé (120) d'un opérationnel (102) dans ledit site (112) pour accéder à une pièce d'arrivée à partir d'une pièce de départ, et

ii) un terminal mobile (122) accessible audit opérationnel (102) comprenant des moyens pour communiquer en temps réel avec ledit serveur (116) de guidage afin, d'une part, de transmettre à ce dernier une liste (124) de pièces (104, 106, 108, 110) requises par ledit opérationnel (102) et, d'autre part, de recevoir dudit serveur (116) de guidage une cartographie (118) dudit site (112) permettant d'afficher un déplacement optimisé (120) entre au moins deux pièces (104, 106, 108, 110) de la liste transmise (124) considérées comme pièce de départ ou pièce d'arrivée.

## Description

La présente invention concerne un système de guidage d'un opérationnel sur un site de stockage.

Afin de distribuer des ressources physiques, par exemple des pièces requises pour la fabrication ou le montage d'un produit, il est connu de regrouper ces dernières sur un site de stockage.

Certains de ces sites de stockage peuvent avoir des dimensions importantes, de l'ordre de plusieurs dizaines ou centaines de mètres en longueur et/ou largeur, de telle sorte que des opérationnels doivent parfois parcourir à pied des distances importantes pour trouver des pièces requises.

Par exemple, en considérant qu'un opérationnel est un employé d'un fabriquant de téléphone à la recherche de pièces de clavier et d'écran propres à un téléphone portable, cet opérationnel peut être amené à parcourir de nombreux rayons d'un site de stockage de pièces de téléphones portables où sont stockés des milliers de pièces de téléphone pour différents modèles fabriqués.

De ce fait, un opérationnel risque de perdre du temps à rechercher des pièces qui, de plus, peuvent être absentes lorsque, par exemple, elles sont épuisées.

Par ailleurs, il convient de noter que la localisation de pièces dans un site de stockage peut être modifiée de telle sorte qu'un opérationnel, habitué à rechercher des pièces selon un parcours récurrent dans un site, par exemple pour limiter la distance parcourue, peut se retrouver perturbé par une telle modification et, à nouveau, perdre du temps à rechercher des pièces.

Finalement il convient de noter que, dans les sites de stockage comprenant un nombre élevé de pièces directement accessibles sur différents rayons, l'opérationnel est généralement dépourvu d'aide interactive pour le conseiller sur la sélection des pièces à emporter. De ce fait, il ne peut s'informer sur l'existence de produits similaires ou équivalents à des produits recherchés, par exemple pour réduire des coûts ou pallier à un manque des pièces initialement requises.

En résumé, la recherche de pièces par un opérationnel dans un site de stockage se révèle coûteuse en temps et dépourvue de toute assistance.

La présente invention vise à résoudre au moins un des problèmes précédemment mentionnés en offrant un système de guidage d'un opérationnel dans un site de stockage de façon à réduire le temps, et donc le coût, associé à la recherche de pièces dans le site.

C'est pourquoi, la présente invention concerne un système de guidage d'un opérationnel sur un site de stockage de pièces d'un fournisseur, ledit opérationnel devant effectuer des déplacements dans ledit site de stockage pour accéder à différentes pièces requises, caractérisé en ce qu'il comprend:
i) un serveur de guidage, accessible au fournisseur, muni:
   - de moyens pour stocker une cartographie dudit site de stockage et des localisations de pièces distribuées dans ledit site de stockage, et
   - de moyens pour déterminer un déplacement optimisé d'un opérationnel dans ledit site pour accéder à une pièce d'arrivée à partir d'une pièce de départ, et
ii) un terminal mobile accessible audit opérationnel comprenant des moyens pour communiquer en temps réel avec ledit serveur de guidage afin, d'une part, de transmettre à ce dernier une liste de pièces requises par ledit opérationnel et, d'autre part, de recevoir dudit serveur de guidage une cartographie dudit site permettant d'afficher un déplacement optimisé entre au moins deux pièces de la liste transmise considérées comme pièce de départ ou pièce d'arrivée.

Grâce à un système conforme à l'invention, un opérateur peut accéder successivement à un ensemble de pièces listées en effectuant des déplacements guidés par affichage sur son terminal mobile entre deux desdites pièces listées.

De fait, un système conforme à l'invention fourni à un opérationnel une cartographique du site de stockage et un parcours pouvant être optimisé afin, par exemple, de limiter la distance parcourue dans le site de stockage.

Ainsi, le coût de l'approvisionnement en pièces et, par conséquent, de l'assemblage et/ou de la production éventuellement effectuée avec ces pièces, est réduit.

Par ailleurs, la cartographie comprenant la localisation des pièces distribuées peut être mise à jour par le fournisseur afin que l'opérationnel soit certain de trouver une pièce recherchée indiquée dans ladite cartographie, ce qui lui permet à nouveau de réduire le coût de sa recherche de pièces.

Finalement, il convient de noter qu'un tel système peut paraître complexe compte tenu de l'intervention de deux, voire trois entités - fournisseur, opérateur de télécommunication, opérationnel. Mais il fournit néanmoins un système de guidage satisfaisant à l'intérieur d'un site de stockage qui, étant généralement couvert, ne permet pas la mise en oeuvre d'un guidage au moyen de signaux satellitaires type GPS, pour Global Positioning System en anglais.

Dans une réalisation, lesdits moyens de communication en temps réel comprennent des moyens de transmission de données entre ledit serveur de guidage et ledit terminal mobile via un réseau de télécommunication mobile, du type réseau cellulaire.

Selon une réalisation, le serveur comprend des moyens pour que l'opérationnel renseigne manuellement sa localisation auprès d'une pièce de ladite liste transmise afin que ledit terminal puisse afficher des informations relatives à un parcours restant, à partir de cette position, jusqu'à une nouvelle pièce de ladite liste transmise.

Dans une réalisation, le système comprend des moyens pour que, lors du renseignement de la position de l'opérationnel auprès d'une pièce, on effectue au moins une des opérations suivantes : Fournir des informations sur ladite pièce, fournir des informations sur une pièce équivalente à ladite pièce, fournir des informations sur un autre approvisionnement possible dans le site.

Selon une réalisation, le système comprend des moyens pour optimiser un parcours en déterminant un déplacement minimal dans ledit site à travers ce parcours.

Dans une réalisation, le serveur de guidage comprend des moyens pour permettre un stockage de données propres à différents fournisseurs, gérant différents sites, chaque fournisseur pouvant accéder audit serveur de guidage.

Selon une réalisation, le serveur de guidage comprend des moyens pour permettre un stockage de données propres à une pluralité d'opérationnels, notamment relatives à au moins une liste et/ou un parcours précédemment mis en oeuvre.

L'invention concerne également un serveur de guidage d'un opérationnel sur un site de stockage de pièces d'un fournisseur, ledit opérationnel devant effectuer des déplacements dans ledit site de stockage pour accéder à différentes pièces requises, caractérisé en ce qu'il comprend:
- des moyens pour être accessible audit fournisseur afin de stocker une cartographie dudit site de stockage et des localisations de pièces distribuées dans ledit site de stockage, et
- des moyens pour déterminer un déplacement optimisé d'un opérationnel dans ledit site à partir d'une liste de pièces fournie par un terminal mobile de façon à participer à la mise en oeuvre d'un système conforme à l'une des réalisations précédentes.

L'invention concerne également un terminal destiné à participer dans un système de guidage d'un opérationnel sur un site de stockage de pièces d'un fournisseur, ledit opérationnel devant effectuer des déplacements dans ledit site de stockage pour accéder à différentes pièces requises, caractérisé en ce qu'il comprend des moyens pour communiquer en temps réel avec un serveur de guidage afin, d'une part, de transmettre à ce dernier une liste de pièces requises par ledit opérationnel et, d'autre part, de recevoir dudit serveur de guidage une cartographie dudit site permettant d'afficher un déplacement optimisé entre les pièces de la liste transmise de façon à participer à la mise en oeuvre d'un système conforme à l'une des réalisations précédentes.

Finalement, l'invention concerne un procédé de guidage d'un opérationnel sur un site de stockage de pièces d'un fournisseur, ledit opérationnel devant effectuer des déplacements dans ledit site de stockage pour accéder à différentes pièces requises, caractérisé en ce qu'il met en oeuvre un système conforme à l'une des réalisations précédentes.

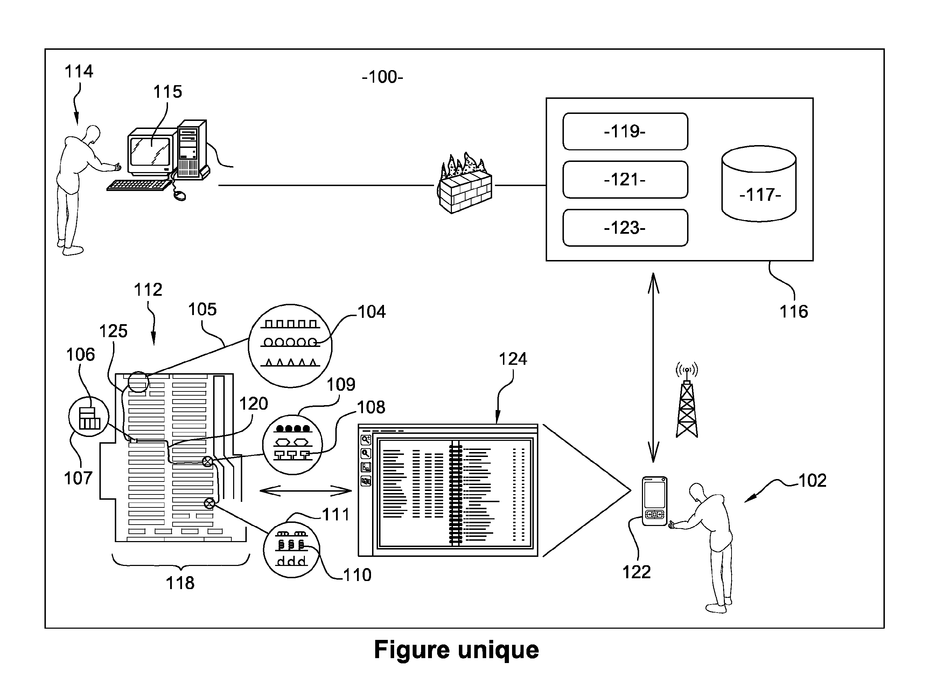

D'autres caractéristiques et avantages de l'invention apparaîtront à la lumière de la description ci-dessous, effectuée à titre illustrative et non limitatif, en référence à l'unique figure ci-jointe sur laquelle est représenté de façon schématique un système conforme à l'invention.

En référence à cette figure est illustré un système 100 de guidage destiné à optimiser l'accès d'un opérationnel 102 à des pièces 104, 106, 108 et 110 distribuées en des localisations respectives 105, 107, 109 et 111 d'un site 112 de stockage géré par un fournisseur 114.

Compte tenu des dimensions dudit site 112 faisant plusieurs dizaines, voire centaines, de mètres en longueurs et en largeur, ce qui lui permet de stocker plusieurs plusieurs milliers de pièces, ledit opérationnel 102 doit effectuer des déplacements importants - typiquement plusieurs centaines de mètres - pour atteindre de façon successive différentes localisations où sont situées différentes pièces requises.

Afin de guider l'opérationnel 102 dans le site 112, le système 100 comprend un serveur 116 de guidage, accessible au fournisseur 114, muni : a) de moyens, notamment une base de données 117, pour stocker une cartographie 118 dudit site 112 de stockage et des localisations 105, 107, 109 et 110 des pièces 104, 106, 108 et 110 distribuées dans ledit site 112 de stockage.

Dans cette réalisation, cette cartographie 118 et ces localisations des produits sont transmises par le fournisseur 114, via un serveur 115 de gestion relié au serveur 116 de guidage par une connexion à distance, typiquement via le réseau Internet.

Ainsi, le fournisseur 114 peut mettre à jour la base de données 117 lorsque la distribution des pièces dans son site est modifiée, par exemple suite à des mouvements des rayons, à l'arrivée de nouvelles pièces ou à l'épuisement de pièces devenues inexistantes.

Dans ce cas, le serveur 116 peut comprendre des moyens pour permettre un stockage de données propres à une pluralité de fournisseurs, gérant une pluralité de sites, chaque fournisseur pouvant accéder audit serveur de guidage à travers une interface 119 dédiée.

Dans cette réalisation, le serveur de guidage comprend également :
- une interface 121 dédiée à la prise en compte d'informations relatives à des pièces distribuées, comme par exemple des modes d'emploi, des caractéristiques physiques de résistance et/ou des suggestions de pièces pouvant être équivalentes.
- une interface 123 permettant à l'opérationnel 102 de communiquer avec ladite base 116 comme décrit ultérieurement.
- des moyens (comprenant des logiciels de calcul pouvant être situés dans le terminal et/ou dans le serveur, ainsi que des données préférablement centralisés au niveau du serveur puisque, dans la réalisation préférée, tous les traitements et calculs mis en oeuvre par l'invention sont localisés côté serveur) pour déterminer un déplacement 120 optimisé dans le site 112 entre une pièce de départ et une pièce d'arrivée distribuées dans ledit site.

Par ailleurs, le système 100 comprend également un terminal mobile 122, accessible à l'opérationnel 102, muni de moyens pour communiquer avec ledit serveur 116 afin de transmettre à ce dernier une liste 124 de pièces requises par ledit opérationnel 102. Dans cette réalisation, cette liste 124 de pièces requises est obtenue automatiquement à partir d'une liste déjà mise en oeuvre lors d'un précédent parcours de l'opérationnel 102 dans le site 112.

Dans une réalisation, ce parcours 120 précédemment effectué est modifié en fonction de mises à jour de la base 117 par le fournisseur - par exemple épuisement d'une pièce n'étant plus accessible ou déplacement de cette dernière à une nouvelle localisation - ou de l'opérateur 102 - par exemple modification de la liste 124 depuis ce dernier parcours.

D'autre part, ces moyens de communication du terminal mobile 122 permettent de recevoir dudit serveur 116 la cartographie 118 du site 112 affichée avec un déplacement 120 optimisé permettant d'accéder successivement aux pièces de ladite liste transmise.

De fait, il apparaît ainsi que l'interface 123 de l'opérationnel permet à ce dernier de stocker ses listes et/ou ses parcours habituels dans un compte dédié.

A partir de ces listes et/ou parcours habituels, le fournisseur peut alors proposer à l'opérationnel des pièces alternatives à ces pièces enregistrées, des promotions sur certaines pièces - par exemple en fin de vie- ainsi que des informations relatives aux pièces listées (qualité, origine, mode d'emploi, etc).

De façon pratique, l'opérationnel 102 est guidé en consultant l'écran de son terminal qui affiche la cartographie 118 du site de stockage 112 pour se déplacer, par exemple d'une pièce de départ vers une pièce d'arrivée.

De fait, selon les réalisations, le parcours affiché peut être relatif à toutes les pièces affichées ou à un nombre limité, par exemple deux pièces telles qu'une pièce est un point de départ et l'autre pièce un point d'arrivée

Dans ce cas, lorsque l'opérationnel atteint ladite pièce d'arrivée, l'opérationnel peut valider manuellement son déplacement jusqu'à ladite seconde pièce d'arrivée afin que le terminal affiche un guidage d'un déplacement jusqu'à une troisième pièce issue de la liste des pièces à atteindre, la seconde pièce considérée lors de la précédente phase de guidage comme une pièce d'arrivée devenant alors une pièce de départ.

Ainsi, l'opérateur accède successivement à l'ensemble des pièces listées en itérant les guidages effectués par son terminal mobile entre deux pièces listées.

Dans cette réalisation, le système 100 comprend des moyens pour que ce guidage soit effectué pour l'ensemble des pièces listées selon un déplacement optimisé, typiquement en réduisant la distance parcourue par l'opérateur dans le site de stockage au minimum.

En outre, la validation d'un parcours, d'une pièce de départ à une pièce d'arrivée, est effectuée en temps réel à chaque validation manuelle de l'opérateur vis-à-vis d'un déplacement effectué.

A cet effet, les moyens de transmission du terminal en temps réel comprennent des moyens de transmission de données entre ledit serveur et ledit terminal mobile via un réseau de télécommunication mobile, du type réseau cellulaire.

Ainsi il est possible d'offrir de multiples services à un opérationnel au sein du site de distribution. Par exemple, lors de la validation d'un déplacement jusqu'à une pièce d'arrivée, le système permet d'effectuer au moins une des opérations suivantes : Fournir des informations sur ledit produit, fournir des informations sur un produit équivalent audit produit, fournir des informations sur un autre approvisionnement possible dans le site, fournir un chemin jusqu'à un troisième produit de la liste d'approvisionnement.

La présente invention est susceptible de nombreuses variantes. Par exemple, la cartographie 118 affichée par le terminal 102 peut être statique ou dynamique en considérant, par exemple, une vitesse de déplacement de l'opérateur dans le site.

De même, les cartographies peuvent être à 2 ou 3 dimensions et relatives à l'ensemble du parcours 120 ou à une partie 125 dudit parcours en cours de réalisation.

Par ailleurs, il convient de noter que la base 117 de données peut être gérée par un tiers vis-à-vis du fournisseur 124 et de l'opérationnel 102, typiquement par un opérateur de télécommunication en charge de :
- Enregistrer des sites de stockages,
- Associer des informations propres à chaque site de stockage (adresse, plan d'accès, horaires, cartographie, etc),
- Mettre à jour les informations des pièces accessibles et de leur localisation.

Dans ce cas, l'opérationnel 102 peut obtenir le service associé au système décrit en s'abonnant à ce service via son téléphone portable à travers lequel il peut obtenir la liste des sites offrant des pièces requises, obtenir des informations spécifiques vis-à-vis d'un site sélectionné et obtenir un parcours optimisé dans le site sélectionné par location.

Finalement, il convient de noter qu'un système conforme à l'invention peut être mis en oeuvre dans de nombreuses industries - aéronautiques, automobiles, électroniques - mais également vis-à-vis du grand public où un site de stockage pouvant correspondre à une surface de grande distribution tandis que les ressources, ou les pièces, distribuées sont des produits de grande consommation distribuées à des consommateurs 102.

## Revendications

1. Système (100) de guidage d'un opérationnel (102) sur un site (112) de stockage de pièces (104, 106, 108, 110) d'un fournisseur (114), ledit opérationnel (102) devant effectuer des déplacements dans ledit site (112) de stockage pour accéder à différentes pièces requises, **caractérisé en ce qu'**il comprend:
i) un serveur de guidage (116), accessible au fournisseur (114), muni:
- de moyens pour stocker une cartographie (118) dudit site (112) de stockage et des localisations (105, 107, 109, 110) de pièces (104, 106, 108, 110) distribuées dans ledit site (112) de stockage, et
- de moyens pour déterminer un déplacement optimisé (120) d'un opérationnel (102) dans ledit site (112) pour accéder à une pièce d'arrivée à partir d'une pièce de départ, et
ii) un terminal mobile (122) accessible audit opérationnel (102) comprenant des moyens pour communiquer en temps réel avec ledit serveur (116) de guidage afin, d'une part, de transmettre à ce dernier une liste (124) de pièces (104, 106, 108, 110) requises par ledit opérationnel (102) et, d'autre part, de recevoir dudit serveur (116) de guidage une cartographie (118) dudit site (112) permettant d'afficher un déplacement optimisé (120) entre au moins deux pièces (104, 106, 108, 110) de la liste transmise (124) considérées comme pièce de départ ou pièce d'arrivée.

2. Système (100) selon la revendication 1 **caractérisé en ce que** lesdits moyens de communication en temps réel comprennent des moyens de transmission de données entre ledit serveur (116) de guidage et ledit terminal mobile (122) via un réseau de télécommunication mobile, du type réseau cellulaire.

3. Système (100) selon la revendication 1 ou 2 **caractérisé en ce qu'**il comprend des moyens pour que l'opérationnel (102) renseigne manuellement sa localisation (105, 107, 109, 110) auprès d'une pièce (104, 106, 108, 110) de ladite liste (124) transmise afin que ledit terminal (122) puisse afficher des informations relatives à un parcours (120) restant, à partir de cette position (105, 107, 109, 110), jusqu'à une nouvelle pièce (104, 106, 108, 110) de ladite liste (124) transmise.

4. Système (100) selon la revendication 3 **caractérisé en ce qu'**il comprend des moyens pour que, lors du renseignement de la position (105, 107, 109, 110) de l'opérationnel auprès d'une pièce (104, 106, 108, 110), on effectue au moins une des opérations suivantes : Fournir des informations sur ladite pièce (104, 106, 108, 110), fournir des informations sur une pièce équivalente à ladite pièce (104, 106, 108, 110), fournir des informations sur un autre approvisionnement possible dans le site (112).

5. Système (100) selon l'une des revendications précédentes **caractérisé en ce qu'**il comprend des moyens pour optimiser un parcours (120) en déterminant un déplacement minimal dans ledit site (120) à travers ce parcours.

6. Système (100) selon l'une des revendications précédentes **caractérisé en ce que** le serveur (116) de guidage comprend des moyens pour permettre un stockage de données propres à différents fournisseurs (114), gérant différents sites (112), chaque fournisseur (114) pouvant accéder audit serveur (112) de guidage.

7. Système (100) selon l'une des revendications précédentes **caractérisé en ce que** le serveur (116) de guidage comprend des moyens pour permettre un stockage de données propres à une pluralité d'opérationnels (102), notamment relatives à au moins une liste et/ou un parcours précédemment mis en oeuvre.

8. Serveur (116) de guidage d'un opérationnel (102) sur un site (112) de stockage de pièces (104, 106, 108, 110) d'un fournisseur (114), ledit opérationnel (102) devant effectuer des déplacements dans ledit site (112) de stockage pour accéder à différentes pièces requises, **caractérisé en ce qu'**il comprend:
- des moyens (119) pour être accessible audit fournisseur (114) afin de stocker une cartographie (118) dudit site (112) de stockage et des localisations (105, 107, 109, 110) de pièces (104, 106, 108, 110) distribuées dans ledit site (112) de stockage, et
- des moyens pour déterminer un déplacement optimisé (120) d'un opérationnel (102) dans ledit site (112) à partir d'une liste de pièces fournie par un terminal mobile (122) de façon à participer à la mise en oeuvre d'un système conforme à l'une des revendications précédentes.

9. Terminal destiné à participer dans un système (100) de guidage d'un opérationnel (102) sur un site (112) de stockage de pièces (104, 106, 108, 110) d'un fournisseur (114), ledit opérationnel (102) devant effectuer des déplacements dans ledit site (112) de stockage pour accéder à différentes pièces requises, **caractérisé en ce qu'**il comprend:
i) des moyens pour communiquer en temps réel avec un serveur (116) de guidage afin, d'une part, de transmettre à ce dernier une liste (124) de pièces (104, 106, 108, 110) requises par ledit opérationnel (102) et, d'autre part, de recevoir dudit serveur (116) de guidage une cartographie (118) dudit site (112) permettant d'afficher un déplacement optimisé (120) entre les pièces (104, 106, 108, 110) de la liste transmise (124) de façon à participer à la mise en oeuvre d'un système conforme à l'une des revendications 1 à 7.

10. Procédé de guidage d'un opérationnel (102) sur un site (112) de stockage de pièces (104, 106, 108, 110) d'un fournisseur (114), ledit opérationnel (102) devant effectuer des déplacements dans ledit site (112) de stockage pour accéder à différentes pièces requises, **caractérisé en ce qu'**il met en oeuvre un système (100) conforme à l'une des revendications 1 à 7.
